# EUROPEAN PATENT SPECIFICATION

(11) **EP 0 824 466 B1**
(45) Date of publication and mention of the grant of the patent: **07.11.2001**
(21) Application number: 96913190.3
(22) Date of filing: 26.04.1996
(51) Int. Cl.: B65D 41/34, B65D 41/04, B65D 1/02

(54) **TAMPER-EVIDENT CAP AND NECK FINISH**
ORIGINALITÄTSKAPPE UND BEHÄLTERHALS
BOUCHON ET BAGUE DE GOULOT INVIOLABLES

(30) Priority: 27.04.1995 US 430019
(43) Date of publication of application: 25.02.1998
(73) Proprietor: Northern Engineering and Plastics Corporation, New Castle, PA 16101 (US)
(72) Inventor: MOLINARO, Luca, New Castle, PA 16107 (US)
(74) Representative: Weston, Robert Dale
(86) International application number: PCT/US96/05835
(87) International publication number: WO 96/33921

(56) References cited:
- EP-A- 0 118 267
- EP-A- 0 337 046
- EP-A- 0 450 959
- GB-A- 2 172 273
- US-A- 4 572 387
- US-A- 5 307 946

## Description

The present invention relates to a novel neck finish particularly well suited for blow-moulded containers, a novel snap-on, screw-off caps which have a tamper-evident locking feature and to the combination thereof.

The closest prior art is considered to be US-A-5 307 946 (Molinaro), which discloses a snap-on, screw-off closure for a container having a neck finish comprising an annular wall with an outer surface and an inner surface defining a cylindrical opening therethrough; at least one set of ratchet teeth positioned around a portion of the outer wall surface at one end of the wall; and multiple start threads helically spaced and positioned on the outer wall surface between the other wall end and the ratchet teeth; and a tamper-evident cap comprising a closure member having a top with a substantially circular periphery to cover the neck finish and an annular wall depending from the periphery of the top and including an internal surface; a removable tamper-evident band circumferentially positioned around the depending annular wall opposite from the top, the tamper evident band including at least one means to engage the neck finish ratchet teeth; and multiple start threads helically spaced and positioned on the internal wall surface to engage at least some of the threads on the neck finish, the threads extending from above the tamper evident band to proximate the closure member top. The advantage of the -preferably seven- multiple start threads of this patent specification is stated to be the increased ease of "snap-on" placement of the cap onto the threaded neck using standard bottle capping equipment and without an additional tightening step such as a final twist.

EP-A-0 118 267 (Massmould Holdings Limited) discloses a snap-on, screw-off closure for a container with multi-start threads, six threads each extending helically for a part-turn only are shown in the drawings.

US-A-4 561 553 (Crisci) discloses a snap-on, twist-off tamper proof closure for containers having a neck with a pair of vertically spaced fastening configurations on the exterior thereof and having a cap portion with an annular ribbed flange and a tear skirt depending from the portion with the annular ribbed flange, the tear skirt having a pull tab for the removal thereof, the cap portion having an annular flange therein and the ribbed flange having an annular groove therein defining a frangible wall joining the ribbed flange and tear skirt. The annular flange in the cap portion seats under one of the fastening configurations of the neck of the container and the annular groove in the annular ribbed flange receives the other fastening configuration on the neck of the container to form dual fasteners, either one of which is capable of holding the closure on the neck portion of the container. A pair of circumferentially spaced thread-like ribs are formed on the inner surface of the ribbed flange and a pair of circumferentially spaced thread-like ribs are formed on the outer surface of the neck portion of the container. When the tear skirt is removed, the opposite sides of the ribbed flange may be moved inwardly to engage the thread-like ribs so that twisting the closure removes it from the neck of the container.

GB-A-2 269 163 (Molinaro) relates to a snap-on, pull-off tamper-indicating flexible cap for containers and discloses only a single thread 13 or 31. US-A-5 285 912 (Molinaro) relates to a push-on or screw-on, pull-off tamper evident flexible cap for containers, only three threads 13, 14, 15 are disclosed. Also, there is no disclosure of removable interengaging cap and neck finish flanges.

As is apparent from the prior art, a great deal of effort has gone into the design of cap and bottle neck finishes to provide easy on and off use of the cap by the bottler and ultimately by the end user of the bottled product. The problem associated with these prior art cap and neck finishes is that a secure seal is not provided and that the cap is not easy to use either in removal from the bottle or in reapplication onto the bottle.

Accordingly the present invention comprises in combination a cap and a container as defined in claim 1 wherein the container comprises a neck finish having an annular wall with an outer surface and an inner surface defining a cylindrical opening therethrough; at least one set of ratchet teeth positioned around a portion of the outer wall surface at one end of the wall; and multiple start threads helically spaced and positioned on the outer wall surface between the other wall end and the ratchet teeth; and the cap is snap-or screw-on, screw-off, tamper-evident and comprises a closure member having a top with a substantially circular periphery to cover the neck finish and an annular wall depending from the periphery of the top and including an internal surface; a removable tamper-evident band circumferentially positioned around the depending annular wall opposite from the top, the tamper evident band including at least one means to engage the neck finish ratchet teeth; and multiple start threads helically spaced and positioned on the internal wall surface to engage at least some of the threads on the neck finish, the threads extending from above the tamper evident band to proximate the closure member top; the cap threads being adapted to engage the neck finish threads either by screw fit or direct compressive force wherein the neck finish has at least ten threads and a first annular ring flange on and extending substantially around the wall outer surface between the threads and the set of ratchet teeth; the tamper-evident cap has at least ten threads and a first annular ring flange positioned around the internal wall surface adjacent the tamper evident band; the neck first annular flange being located and dimensioned to engage and co-operate with the cap first annular ring flange to retain the cap on the neck finish when the cap is pushed thereon.

In the present invention a solution is provided to the above stated problems as the specified number of threads makes it easier for the cap to be reliably screwed-or snapped-on to the neck finish, unscrewed therefrom and re-screwed thereon and the engagement between the neck and cap first annular bands ensures a reliable seal.

According to a first embodiment of the present invention, the neck finish includes a second annular ring flange positioned between the other end of the annular wall and the threads and the cap includes a second annular ring flange positioned between the top and the threads; the second neck annular flange located and dimensioned to engage and co-operate with the cap second neck annular flange to retain the cap on the neck finish when the cap is pushed thereon.

According to a second embodiment of the present invention, each annular neck ring flange may include a circumferential lip.

According to a third embodiment of the present invention, the cap threads are equal in number and at the same helical angle to the neck threads.

According to a fourth embodiment of the present invention, each helical thread may extend for less than 180°, preferably less than 90°, around the neck outer wall surface or the cap internal wall surface.

According to a fifth embodiment of the present invention, the neck annular wall has one or more moulding part lines and the threads are discontinuous at the part line or lines.

According to a sixth embodiment of the present invention, the cap is formed of low density plastic; for example polypropylene.

In an addition, the present invention is for a container having a neck finish for use with a given snap- or screw-on, screw-off and tamper evident cap and as defined in appended claims 8 to 12.

In another addition, the present invention is for a snap- or screw-on, screw-off and tamper evident cap finish for use with a container having a given neck finish and as defined in appended claims 13 to 17.

The present invention therefore provides a generic snap-on cap and neck finish and a cap that, when used in combination affords enhanced application of the cap to the neck finish both by the end user of the container 1 closure, but also by the filler/capper of the container. The invention facilitates the placement of the cap on the neck finish either by snapping over the neck or by screwing. In either method a leak-free closure is provided.

The above and other advantages of the present invention are illustrated, by way of example, in the Drawings, wherein:-
Fig. 1 is an elevation in partial section of a bottle neck finish and cap according to the present invention;
Fig. 2 is a plan view of the cap shown in Fig. 1;
Fig. 3 is a partial section of the neck finish and cap shown in Fig. 1;
Fig. 4 is a partial section of a neck finish and cap having only one annular ring flange; and
Fig 5 is an elevation of a neck finish of the present invention using a part line.

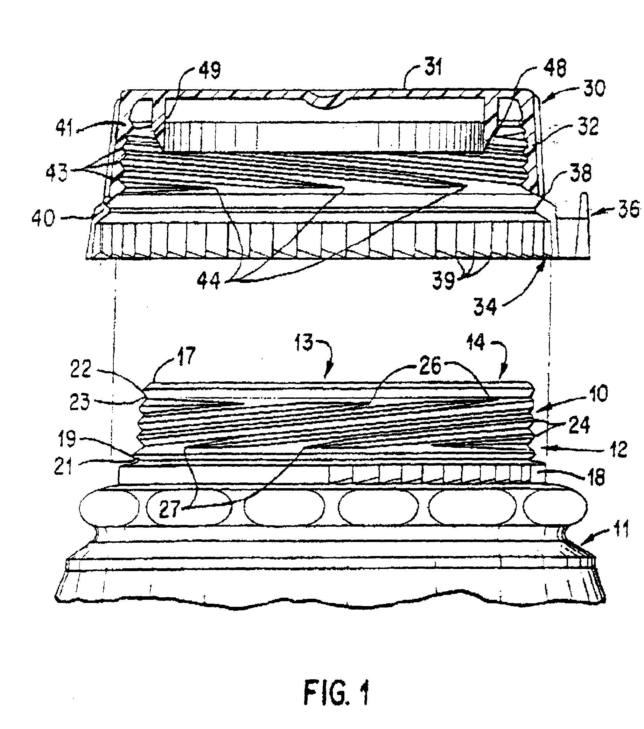

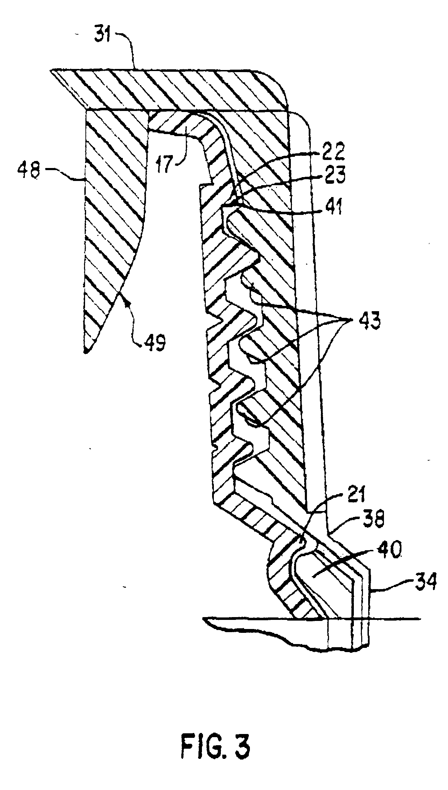

Referring to the drawings, the neck finish 10 of a bottle 11 is partially shown in fig. 1. Neck finish 10 includes an annular wall 12 defining there through cylindrical opening 13 having a first end 14 and a second end. First end 14 provides access to opening 13. An annular flange 17 is provided at the first end of the annular wall and extends inwardly of the wall 12. Preferably the annular flange extends inwardly at a slight outward angle from the plane of the first end as shown in Fig 3.

Positioned adjacent to second end 16 is at least one set of annular ratchet teeth 18 to provide a tamper evident grip for the cap. Ratchet teeth 18 may be positioned around the entire circumference of the second end or only a portion thereof. In one embodiment, it is preferred that the teeth of two different sets of teeth 18 be positioned in an opposing direction to prevent "backing off' the cap from the bottle. Ratchet teeth 18 are adapted to co-operatively engage corresponding teeth on a tamper evident ring positioned on the base of matching cap.

A first annular ring flange 19 having a circumferential lip 21 (see Fig. 3) is positioned substantially adjacent to the plane in which the annular ratchet teeth 18 are provided. The annular ring flange is particularly useful when using a low density plastic cap. In a preferred embodiment of the invention, a second annular ring flange 22 having a circumferential lip 23 is provided proximate of the first end 14 of annular wall 11. These ring flanges provide a means for co-operating flanges on a cap to snap over and lock on to the bottle.

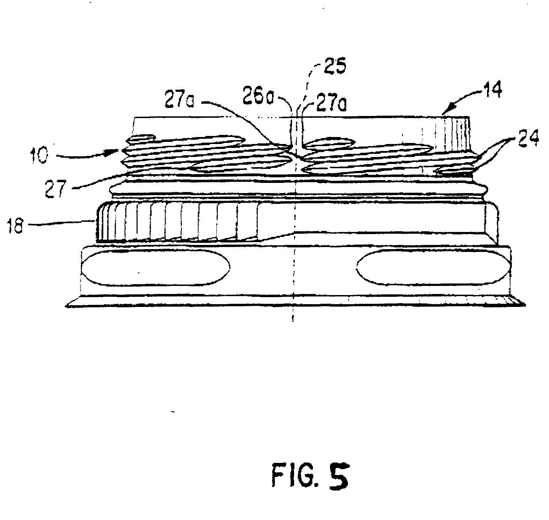

Helically extending between the first end 14 or the second annular ring flange 22, when provided, and the first annular ring flange 19, are at least ten threads 24 terminating at points 26 and 27, adjacent first end 14 and first annular ring flange 19, respectively. Preferably, threads 24 are helically spaced in contiguous relationship as shown in fig. 1. Preferably, each thread 24 extends less than 360° and more preferably less than 270° around the circumference of annular wall 11. However, as shown in Figure 5, neck finish 10 is provided with a part line 25 (shown in dotted line) to facilitate removal of the neck from its mould. In this case, threads 24 that extend over a part line 25 are discontinuous or interrupted and include terminating points 26a and 27a. The manufacture of neck finish 11 is particularly well suited to standard blow moulding of milk containers by substitution of the neck finish mould conforming to the present invention.

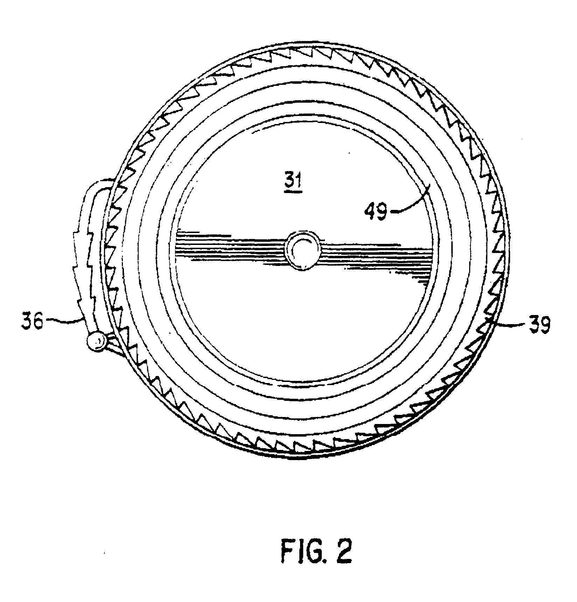

Preferably cap 30 is made from a low density polypropylene. Cap 30 comprises a closure member having a top 31 designed to cover the mouth or opening in a neck finish of a container such as neck finish 10 of the present invention. According to the invention, the closure member is substantially circular and includes depending annular wall 32. Annular wall 32 includes a tamper-evident band 34 around its other end. Tamper-evident band 34 includes a pull tab 36 which may be upwardly or downwardly extending. Tamper evident band 34 is preferably formed as a part of annular wall 32 with tear line 38 to permit tearing the band from the wall to allow removal of the cap from the neck finish. Tamper-evident band 34 includes ratchet teeth 39 adapted to engage teeth on the neck finish of a container, as shown in Fig. 2. Band 34 can include frangible elements breakably securing them to the annular wall as is well known in the art.

Cap 30 includes a first annular lip or ring flange 40 positioned on the annular wall adjacent tear line 38. In a preferred embodiment a second annular lip or ring flange 41 is positioned on annular wall 32 proximate of top 31. First and second annular ring flanges 40 and 41 are preferably located and dimensioned to engage and co-operatively retain cap 30 on first and second ring flanges 21 and 23 of neck finish 10, respectively, when the cap is pushed onto the neck finish.

Extending from adjacent first annular lip 40 to proximate top 31, or when used adjacent second annular ring flange 41, are at least ten helically spaced threads 43 on the inner surface of annular depending wall 32 each having respective lead openings 44. Preferably threads 43 extend less than 360° and more preferably less than 270° and most preferably less than 90° around the inner surface of annular depending wall 32.

Depending from top 31, is depending annular valve 48. Annular valve 48 is spaced apart from annular depending wall 32 a distance which is represented by the difference in the radial distance from the outer edge of annular wall 12 at its first end 14 and centre of the opening 13 and the inner edge of annular wall 12 or flange 17 when used. Valve 48 extends a point slightly less than the midpoint extent of threads 43. Preferably valve 48 includes a taper 49 which permits initial engagement of the valve to the inner periphery of the neck finish opening upon engagement of cap 30 prior to the engagement of the first annular lips of the neck finish and cap respectively.

Cap 30 when used in combination with neck finish 10 of the present invention permits both the placement and removal of the cap on the neck finish by pushing on or pulling off. By utilising at least ten threads, it is not necessary to screw the cap on or off the neck. However, by twisting the cap it is possible to obtain an even more secure closure when used by the ultimate consumer, while at the same time providing a leak proof container at the capping station without the necessity of so twisting.

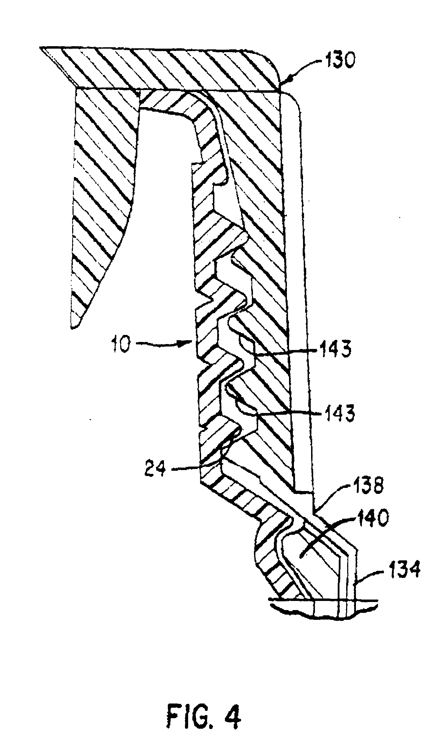

In another embodiment, cap 130 in Figure 4 includes only one annular lip or ring flange 140. The use of only one annular ring flange provides substantially the same closure sealing as two, but eliminates the need for extensive neck finish modification where the moulds are produced by separate manufacturers by eliminating the spacing requirement between the two annular ring flanges.

While presently preferred embodiments of the invention have been shown and described in particularity, the invention may be otherwise embodied within the scope of the appended claims.

## Claims

1. In combination, a cap (30) and a container (11), wherein
the container comprises:-
a neck finish (10) having an annular wall (12) with an outer surface and an inner surface defining a cylindrical opening (13) therethrough;
at least one set of ratchet teeth (18) positioned around a portion of the outer wall surface at one end of the wall (12);
and,
multiple start threads (24) helically spaced and positioned on the outer wall surface between the other wall end (14) and the ratchet teeth (18);
and the cap (30) is snap-or screw-on, screw-off and tamper evident and comprises:-
a closure member having a top (31) with a substantially circular periphery to cover the neck finish (10) and an annular wall (32) depending from the periphery of the top (31) and including an internal surface;
a removable tamper-evident band (34) circumferentially positioned around the depending annular wall (32) opposite from the top (31), the tamper evident band (34) including at least one means (39) to engage the ratchet teeth (18);
and,
multiple start threads (43) helically spaced and positioned on the internal wall surface to engage at least some of the threads (24) on the neck finish (10), the threads (43) extending from above the tamper evident band (34), to proximate the closure member top (31),
the cap threads (43) being adapted to engage the neck finish threads (24) either by screw fit or direct compressive force
**characterised in that**
the neck finish (10) has at least ten threads (24) and a first annular ring flange (19) on and extending substantially around the wall outer surface between the threads (24) and the set of ratchet teeth (18);
the tamper-evident cap (30) has at least 10 threads (43), a first annular ring flange (40) positioned around the internal wall surface adjacent the tamper evident band (34);
the neck first annular ring flange (19) is located and dimensioned to engage and co-operate with the cap first annular ring flange (40) to retain the cap (30) on the neck finish (10) when the cap (30) is engaged thereon.

2. The combination of claim 1 **and further characterised in that** the neck finish (10) includes a second annular ring flange (22) positioned between the other end (14) of the annular wall (12) and the threads (24) and the cap (30) includes a second annular ring flange (41) positioned between the top (31) and the threads (43); the neck second annular ring flange (22) being located and dimensioned to engage and co-operate with the cap second annular ring flange (41) to retain the cap (30) on the neck finish (10) when the cap (30) is engaged thereon.

3. The combination of claim 1 or claim 2 **and further characterised in that** each annular neck ring flange (19, 22) includes a circumferential lip (21, 23).

4. The combination of any of claims 1 to 3 **and further characterised in that** the cap threads (43) are equal in number and at the same helical angle to the neck threads (24).

5. The combination of any of claims 1 to 4 **and further characterised in that** each helical thread (24, 43) extends for less than 180°, preferably less than 90°, around the neck outer wall surface or the cap internal wall surface.

6. The combination of any of claims 1 to 5 **and further characterised in that** the neck annular wall (12) has one or more moulding part lines (25) and the threads (24) are discontinuous at the part line or lines.

7. The combination of any of claims 1 to 6 **and further characterised in that** the cap (30) is formed of low density plastic; for example polypropylene.

8. A container comprising:-
a neck finish (10) having an annular wall (12) with an outer surface and an inner surface defining a cylindrical opening (13) there through;
at least one set of ratchet teeth (18) positioned around a portion of the outer wall surface at one end of the wall;
and,
multiple start threads (24) helically spaced and positioned on the outer wall surface between the other wall end and the ratchet teeth;
and for use with a given snap-or screw-on, screw-off and tamper evident cap comprising:-
a closure member having a top (31) with a substantially circular periphery to cover the neck finish and an annular wall (32) depending from the periphery of the top and including an internal surface;
a removable tamper-evident band (34) circumferentially positioned around the depending annular wall opposite from the cover, the tamper evident band including at least one means (39) to engage the ratchet teeth;
and,
multiple start threads (43) helically spaced and positioned on the internal wall surface to engage at least some of the threads on the neck finish, the threads extending from above the tamper evident band to proximate the closure member top;
the cap threads (43) being adapted to engage the neck finish threads (24) either by screw fit or direct compressive force
**characterised in that**
the neck finish (10) has at least ten threads (24) and a first annular ring flange (19) on and extending substantially around the wall outer surface between the threads (24) and the set of ratchet teeth (18) and is for use with a given tamper-evident cap (30) having at least 10 threads (43) and a first annular ring flange (40) positioned around the internal wall surface adjacent the tamper evident band (34);
and
the neck first annular ring flange (19) is located and dimensioned to engage and co-operate in use with the cap first annular ring flange (40) to retain the cap (30) on the neck finish (10) when the cap (30) is engaged thereon.

9. A container as claimed in claim 8 **and further characterised in that** the neck finish (10) includes a second annular ring flange (22) positioned between the other end (14) of the annular wall (12) and the threads (24) and is for use with a given cap (30) including a second annular ring flange (41) positioned between the top (31) and the threads (43); the neck second annular ring flange (22) being located and dimensioned to engage and co-operate in use with the cap second annular ring flange (41) to retain the cap (30) on the neck finish when the cap (30) is engaged thereon.

10. A container as claimed in claim 8 or claim 9 **and further characterised in that** each neck annular ring flange (19, 22) includes a circumferential lip (21, 23).

11. A container as claimed in any claims 8 to 10 **and further characterised in that** each helical thread (24) extends for less than 180°, preferably less than 90°, around the neck outer wall surface.

12. A container as claimed in any claims 8 to 11 **and further characterised in that** the neck annular wall (12) has one or more moulding part lines (25) and the threads (24) are discontinuous at the part line or lines.

13. A snap-or screw-on, screw-off and tamper evident cap comprising:-
a closure member having a top (31) with a substantially circular periphery to cover a neck finish (10) of a container and an annular wall (32) depending from the periphery of the top and including an internal surface;
a removable tamper-evident band (34) circumferentially positioned around the depending annular wall (32) opposite from the top (31), the tamper evident band (34) including at least one means (39) to engage ratchet teeth (18) on the neck finish (10);
and,
multiple start threads (43) helically spaced and positioned on the internal wall surface to engage at least some of threads (24) on the neck finish (10), the threads (43) extending from above the tamper evident band (34) to proximate the closure member top (31);
and for use with a given container comprising:-
the neck finish (10) having an annular wall (12) with an outer surface and an inner surface defining a cylindrical opening (13) there through;
at least one set of the ratchet teeth (18) positioned around a portion of the outer wall surface at one end of the wall;
and,
the threads (24) being multiple start threads (24) helically spaced and positioned on the outer wall surface between the other wall end (14) and the ratchet teeth (18);
the cap threads (43) being adapted to engage the neck finish threads (24) either by screw fit or direct compressive force
**characterised in that**
the tamper-evident cap (30) has at least 10 threads (43) and a first annular ring flange (40) positioned around the internal wall surface adjacent the tamper evident band (34); and is for use with a given container comprising the neck finish (10) having at least ten threads (24) and a first annular ring flange (19) on and extending substantially around the wall outer surface between the threads (24) and the set of ratchet teeth (18) and the cap first annular ring flange (46) is located and dimensioned to engage and co-operate in use with neck first annular ring flange (19) to retain the cap (30) on the neck finish (10) when the cap (30) is engaged thereon.

14. A cap as claimed in claim 13 **and further characterised in that** the cap (30) includes a second annular ring flange (41) positioned between the top (31) and the threads (43); and is for use with a given neck finish (10) including a second annular ring flange (22) positioned between the other end (14) of the annular wall (12) and the threads (24), the cap second annular ring flange (41) being located and dimensioned to engage and co-operate in use with the neck second annular ring flange (22) to retain the cap (30) on the neck finish (10) when the cap (30) is engaged thereon.

15. A cap as claimed in claim 13 or claim 14 **and further characterised in that** the cap threads (43) are equal in number and at the same helical angle to the neck threads (24) of a given container neck finish (10).

16. A cap as claimed in any of claims 13 to 15 **and further characterised in that** each helical cap thread (43) extends for less than 180°, preferably less than 90°, around the cap internal wall surface.

17. The combination of any of claims 13 to 16 **and further characterised in that** the cap (30) is formed of low density plastic; for example polypropylene.

## Patentansprüche

1. Kombination aus einer Kappe (30) und einem Behälter (11), wobei der Behälter folgendes aufweist:
- eine Halsausführung (10) mit einer ringförmigen Wand (12) mit einer Außenoberfläche sowie einer Innenoberfläche, die eine sie durchsetzende zylindrische Öffnung (13) bilden,
- mindestens einen Satz von Sperrzähnen (18), die um einen Bereich der Außenoberfläche der Wand herum an dem einen Ende der Wand (12) positioniert sind, und
- eine Vielzahl von Startgewindegängen (24), die wendelförmig beabstandet und an der Außenoberfläche der Wand zwischen dem anderen Wandende (14) und den Sperrzähnen (18) positioniert sind;
und wobei die Kappe (30) verrastbar oder aufschraubbar, abschraubbar und Mißbrauch anzeigend ist und folgendes aufweist:
- ein Verschlußelement, das ein Oberteil (31) mit einem im wesentlichen kreisförmigen Umfang zum Bedecken der Halsausführung (10) und eine ringförmige Wand (32) hat, die sich von dem Umfang des Oberteils (31) nach unten erstreckt und eine innere Oberfläche aufweist;
- einen abnehmbaren, Mißbrauch anzeigenden Streifen (34), der umfangsmäßig um die sich nach unten erstreckende ringförmige Wand (32) herum dem Oberteil (31) gegenüberliegend positioniert ist, wobei der Mißbrauch anzeigende Streifen (34) mindestens eine Einrichtung (39) zum Eingriff mit den Sperrzähnen (18) aufweist;
und
- eine Vielzahl von Startgewindegängen (43), die wendelförmig beabstandet und an der inneren Oberfläche der Wand positioniert sind, um mit mindestens einigen der Gewindegänge (24) an der Halsausführung (10) in Eingriff zu gelangen, wobei sich die Gewindegänge (43) von oberhalb des Mißbrauch anzeigenden Streifens (34) bis in die Nähe des Oberteils (31) des Verschlußelements erstrecken;
wobei die Gewindegänge (43) der Kappe so ausgebildet sind, daß sie mit den Gewindegängen (24) der Halsausführung entweder durch Schraubpassung oder durch direkte Druckkraft in Eingriff gelangen,
**dadurch gekennzeichnet,**
**daß** die Halsausführung (10) mindestens zehn Gewindegänge (24) und einen ersten ringförmigen Ringflansch (19) an der Außenoberfläche der Wand und sich im wesentlichen um diese herum erstreckend zwischen den Gewindegängen (24) und dem Satz von Sperrzähnen (18) hat;
**daß** die Mißbrauch anzeigende Kappe (30) mindestens zehn Gewindegänge (43) hat, wobei ein erster ringförmiger Ringflansch (40) um die innere Oberfläche der Wand herum angrenzend an den Mißbrauch anzeigenden Streifen (34) positioniert ist;
und **daß** der erste ringförmige Ringflansch (19) des Halses so angeordnet und dimensioniert ist, daß er mit dem ersten ringförmigen Ringflansch (40) der Kappe in Eingriff gelangt und damit zusammenwirkt, um die Kappe (30) an der Halsausführung (10) festzulegen, wenn die Kappe (30) darauf in Eingriff ist.

2. Kombination nach Anspruch 1,
ferner **dadurch gekennzeichnet,**
**daß** die Halsausführung (10) einen zweiten ringförmigen Ringflansch (22) aufweist, der zwischen dem anderen Ende (14) der ringförmigen Wand (12) und den Gewindegängen (24) positioniert ist, und daß die Kappe (30) einen zweiten ringförmigen Ringflansch (41) aufweist, der zwischen dem Oberteil (31) und den Gewindegängen (43) positioniert ist;
wobei der zweite ringförmige Ringflansch (22) des Halses so angeordnet und dimensioniert ist, daß er mit dem zweiten ringförmigen Ringflansch (41) der Kappe in Eingriff gelangt und damit zusammenwirkt, um die Kappe (30) an der Halsausführung (10) festzulegen, wenn die Kappe (30) darauf in Eingriff ist.

3. Kombination nach Anspruch 1 oder 2,
ferner **dadurch gekennzeichnet,**
**daß** jeder ringförmige Ringflansch (19, 22) des Halses eine Umfangslippe (21, 23) aufweist.

4. Kombination nach einem der Ansprüche 1 bis 3,
ferner **dadurch gekennzeichnet,**
**daß** die Gewindegänge (43) der Kappe von gleicher Anzahl wie die Gewindegänge (24) des Halses sind und unter dem gleichen Steigungswinkel wie diese verlaufen.

5. Kombination nach einem der Ansprüche 1 bis 4,
ferner **dadurch gekennzeichnet,**
**daß** sich jeder wendelförmige Gewindegang (24, 43) über weniger als 180°, bevorzugt weniger als 90°, um die Außenoberfläche der Wand des Halses oder die innere Oberfläche der Wand der Kappe erstreckt.

6. Kombination nach einem der Ansprüche 1 bis 5,
ferner **dadurch gekennzeichnet,**
**daß** die ringförmige Wand (12) des Halses eine oder mehrere Formtrennlinien (25) hat und die Gewindegänge (24) an der Trennlinie oder den Trennlinien diskontinuierlich sind.

7. Kombination nach einem der Ansprüche 1 bis 6,
ferner **dadurch gekennzeichnet,**
**daß** die Kappe (30) aus Kunststoff niedriger Dichte, beispielsweise Polypropylen, geformt ist.

8. Behälter, der folgendes aufweist:
- eine Halsausführung (10), die eine ringförmige Wand (12) mit einer Außenoberfläche und einer Innenoberfläche hat, die eine sie durchsetzende zylindrische Öffnung (13) bilden;
- mindestens einen Satz von Sperrzähnen (18), die um einen Bereich der Außenoberfläche der Wand herum an dem einen Ende der Wand positioniert sind;
und
- eine Vielzahl von Startgewindegängen (24), die wendelförmig beabstandet und an der Außenoberfläche der Wand zwischen dem anderen Wandende und den Sperrzähnen positioniert sind;
- und zum Gebrauch mit einer gegebenen verrastbaren oder aufschraubbaren, abschraubbaren und Mißbrauch anzeigenden Kappe, die folgendes aufweist:
- ein Verschlußelement, das ein Oberteil (31) mit einem im wesentlichen kreisförmigen Umfang zum Bedecken der Halsausführung und eine ringförmige Wand (32) hat, die sich von dem Umfang des Oberteils nach unten erstreckt und eine innere Oberfläche hat;
- einen abnehmbaren, Mißbrauch anzeigenden Streifen (34), der umfangsmäßig um die sich nach unten erstreckende ringförmige Wand herum dem Oberteil gegenüberliegend positioniert ist, wobei der Mißbrauch anzeigende Streifen mindestens eine Einrichtung (39) zum Eingriff mit den Sperrzähnen aufweist; und
- eine Vielzahl von Startgewindegängen (43), die wendelförmig beabstandet und an der inneren Oberfläche der Wand positioniert sind, um mit mindestens einigen der Gewindegänge an der Halsausführung in Eingriff zu gelangen, wobei sich die Gewindegänge von oberhalb des Mißbrauch anzeigenden Streifens bis in die Nähe des Oberteils des Verschlußelements erstrecken;
- wobei die Gewindegänge (43) der Kappe so ausgebildet sind, daß sie mit den Gewindegängen (24) der Halsausführung entweder durch Schraubpassung oder durch direkte Druckkraft in Eingriff gelangen,
**dadurch gekennzeichnet,**
**daß** die Halsausführung (10) mindestens zehn Gewindegänge (24) und einen ersten ringförmigen Ringflansch (19) an der Außenoberfläche der Wand und sich im wesentlichen um diese herum erstreckend zwischen den Gewindegängen (24) und dem Satz von Sperrzähnen (18) hat und zum Gebrauch mit einer gegebenen Mißbrauch anzeigenden Kappe (30) dient, die mindestens zehn Gewindegänge (43) und einen ersten ringförmigen Ringflansch (40) hat, der um die innere Oberfläche der Wand herum angrenzend an den Mißbrauch anzeigenden Streifen (34) positioniert ist;
und **daß** der erste ringförmige Ringflansch (19) des Halses so angeordnet und dimensioniert ist, daß er im Gebrauch mit dem ersten ringförmigen Ringflansch (40) der Kappe in Eingriff gelangt und damit zusammenwirkt, um die Kappe (30) an der Halsausführung (10) festzulegen, wenn die Kappe (30) darauf in Eingriff ist.

9. Behälter nach Anspruch 8,
ferner **dadurch gekennzeichnet,**
**daß** die Halsausführung (10) einen zweiten ringförmigen Ringflansch (22) aufweist, der zwischen dem anderen Ende (14) der ringförmigen Wand (12) und den Gewindegängen (24) positioniert ist, und zum Gebrauch mit einer gegebenen Kappe (30) dient, die einen zweiten ringförmigen Ringflansch (41) aufweist, der zwischen dem Oberteil (31) und den Gewindegängen (43) positioniert ist;
wobei der zweite ringförmige Ringflansch (22) des Halses so angeordnet und dimensioniert ist, daß er im Gebrauch mit dem zweiten ringförmigen Ringflansch (41) der Kappe in Eingriff gelangt und damit zusammenwirkt, um die Kappe (30) an der Halsausführung festzulegen, wenn die Kappe (30) darauf in Eingriff ist.

10. Behälter nach Anspruch 8 oder 9,
ferner **dadurch gekennzeichnet,**
**daß** jeder ringförmige Ringflansch (19, 22) des Halses eine Umfangslippe (21, 23) aufweist.

11. Behälter nach einem der Ansprüche 8 bis 10,
ferner **dadurch gekennzeichnet,**
**daß** sich jeder wendelförmige Gewindegang (24) über weniger als 180°, bevorzugt weniger als 90°, um die Außenoberfläche der Wand des Halses herum erstreckt.

12. Behälter nach einem der Ansprüche 8 bis 11,
ferner **dadurch gekennzeichnet,**
**daß** die ringförmige Wand (12) des Halses eine oder mehrere Formtrennlinien (25) hat und die Gewindegänge (24) an der Trennlinie oder den Trennlinien diskontinuierlich sind.

13. Verrastbare oder aufschraubbare, abschraubbare und Mißbrauch anzeigende Kappe, die folgendes aufweist:
- ein Verschlußelement, das ein Oberteil (31) mit einem im wesentlichen kreisförmigen Umfang zum Bedecken der Halsausführung (10) eines Behälters und eine ringförmige Wand (32) hat, die sich von dem Umfang des Oberteils nach unten erstreckt und eine innere Oberfläche aufweist;
- einen abnehmbaren, Mißbrauch anzeigenden Streifen (34), der umfangsmäßig um die sich nach unten erstreckende ringförmige Wand (32) herum dem Oberteil (31) gegenüberliegend positioniert ist, wobei der Mißbrauch anzeigende Streifen (34) mindestens eine Einrichtung (39) zum Eingriff mit Sperrzähnen (18) an der Halsausführung (10) aufweist;
und
- eine Vielzahl von Startgewindegängen (43), die wendelförmig beabstandet und an der inneren Oberfläche der Wand positioniert sind, um mit mindestens einigen Gewindegängen (24) an der Halsausführung (10) in Eingriff zu gelangen, wobei sich die Gewindegänge (43) von oberhalb des Mißbrauch anzeigenden Streifens (34) bis in die Nähe des Oberteils (31) des Verschlußelements erstrecken;
- und zum Gebrauch mit einem gegebenen Behälter, der folgendes aufweist:
- die Halsausführung (10), die eine ringförmige Wand (12) mit einer Außenoberfläche und einer Innenoberfläche hat, die eine sie durchsetzende zylindrische Öffnung (13) bilden;
- mindestens einen Satz von den Sperrzähnen (18), die um einen Bereich der Außenoberfläche der Wand herum an dem einen Ende der Wand positioniert sind;
und
- wobei die Gewinde (24) eine Vielzahl von Startgewindegängen (24) sind, die wendelförmig beabstandet und an der Außenoberfläche der Wand zwischen dem anderen Wandende (14) und den Sperrzähnen (18) positioniert sind;
- wobei die Gewindegänge (43) der Kappe so ausgebildet sind, daß sie mit den Gewindegängen (24) der Halsausführung entweder durch Schraubpassung oder durch direkte Druckkraft in Eingriff gelangen,
**dadurch gekennzeichnet,**
**daß** die Mißbrauch anzeigende Kappe (30) mindestens zehn Gewindegänge (43) und einen ersten ringförmigen Ringflansch (40) hat, der um die innere Oberfläche der Wand herum angrenzend an den Mißbrauch anzeigenden Streifen (34) positioniert ist; und zum Gebrauch mit einem gegebenen Behälter dient, der die Halsausführung (10) aufweist, die mindestens zehn Gewindegänge (24) und einen ersten ringförmigen Ringflansch (19) an der Außenoberfläche der Wand und sich im wesentlichen um diese herum erstreckend zwischen den Gewindegängen (24) und dem Satz von Sperrzähnen (18) hat,
und **daß** der erste ringförmige Ringflansch (40) der Kappe so angeordnet und dimensioniert ist, daß er im Gebrauch mit dem ersten ringförmigen Ringflansch (19) des Halses in Eingriff gelangt und damit zusammenwirkt, um die Kappe (30) an der Halsausführung (10) festzulegen, wenn die Kappe (30) darauf in Eingriff ist.

14. Kappe nach Anspruch 13,
ferner **dadurch gekennzeichnet,**
**daß** die Kappe (30) einen zweiten ringförmigen Ringflansch (41) aufweist, der zwischen dem Oberteil (31) und den Gewindegängen (43) positioniert ist; und zum Gebrauch mit einer gegebenen Halsausführung (10) dient, die einen zweiten ringförmigen Ringflansch (22) aufweist, der zwischen dem anderen Ende (14) der ringförmigen Wand (12) und den Gewindegängen (24) positioniert ist, wobei der zweite ringförmige Ringflansch (41) der Kappe so angeordnet und dimensioniert ist, daß er im Gebrauch mit dem zweiten ringförmigen Ringflansch (22) des Halses in Eingriff gelangt und damit zusammenwirkt, um die Kappe (30) an der Halsausführung (10) festzulegen, wenn die Kappe (30) darauf in Eingriff ist.

15. Kappe nach Anspruch 13 oder 14,
ferner **dadurch gekennzeichnet,**
**daß** die Gewindegänge (43) der Kappe von gleicher Anzahl wie die Gewindegänge (24) des Halses einer gegebenen Halsausführung (10) eines Behälters sind und unter dem gleichen Steigungswinkel wie diese verlaufen.

16. Kappe nach einem der Ansprüche 13 bis 15,
ferner **dadurch gekennzeichnet,**
**daß** sich jeder wendelförmige Gewindegang (43) der Kappe über weniger als 180°, bevorzugt weniger als 90°, um die innere Oberfläche der Wand der Kappe herum erstreckt.

17. Kombination nach einem der Ansprüche 13 bis 16 und ferner **dadurch gekennzeichnet,**
**daß** die Kappe (30) aus Kunststoff niedriger Dichte, beispielsweise Polypropylen, geformt ist.

## Revendications

1. Bouchon (30) et conteneur (11), en combinaison, dans lesquels le conteneur comporte
- une bague de goulot (10) ayant une paroi annulaire (12) avec une surface extérieure et une surface intérieure définissant une ouverture cylindrique (13) à travers celle-ci ;
- au moins un jeu de dents à rochet (18) disposées autour d'une partie de la surface de la paroi extérieure à une extrémité de la paroi (12) ;
- des amorces de filets multiples (24) hélicoïdalement espacés et disposés sur la surface de la paroi extérieure entre l'autre extrémité de la paroi (14) et les dents à rochet (18) ;
- et le bouchon (30) s'ajuste par encliquetage ou par vissage, se dévisse, est inviolable et comporte :
- un organe de fermeture ayant un sommet (31) avec une périphérie sensiblement circulaire pour recouvrir le goulot (10) et une paroi annulaire (32) dépendant de la périphérie du sommet (31) et comprenant une surface interne ;
- une bande amovible d'inviolabilité (34) disposée circonférenciellement autour de la paroi annulaire dépendante (32) opposée au sommet (31), la bande d'inviolabilité (34) comprenant au moins un moyen (39) de venir en prise avec les dents à rochet (18) ; et
- des amorces de filets multiples (43) espacés hélicoïdalement et disposés sur la surface de la paroi interne pour venir en prise avec au moins certains des filets (24) sur la bague de goulot (10), les filets (43) s'étendant depuis au-dessus de la bande d'inviolabilité (34) jusqu'à proximité du sommet de l'organe de fermeture (31) ;
- les filets (43) du bouchon étant adaptés pour venir au contact des filets (24) de la bague de goulot soit par ajustement vissé soit par l'application d'une force de compression directe,
- **caractérisés en ce que** la bague de goulot (10) possède au moins dix filets (24) et un premier rebord annulaire (19) sur, et s'étendant sensiblement autour de, la surface extérieure de la paroi entre les filets (24) et le jeu de dents à rochet (18) ;
- le bouchon d'inviolabilité (30) possède au moins dix filets (43), un premier rebord annulaire (40) disposé autour de la surface de la paroi interne au voisinage de la bande d'inviolabilité (34) ;
- et le premier rebord annulaire (19) du goulot est disposé et dimensionné pour venir au contact et coopérer avec le premier rebord annulaire (40) du bouchon pour retenir le bouchon (30) sur la bague de goulot (10) lorsque le bouchon (30) est engagé sur celle-ci.

2. Combinaison selon la revendication 1, en outre **caractérisée en ce que** la bague de goulot (10) comprend un deuxième rebord annulaire (22) disposé entre l'autre extrémité (14) de la paroi annulaire (12) et les filets (24) et le bouchon (30) comprend un deuxième rebord annulaire (41) disposé entre le sommet (31) et les filets (43) ; le deuxième rebord annulaire (22) du goulot étant disposé et dimensionné de façon à venir au contact et à coopérer avec le deuxième rebord annulaire (41) du bouchon afin de retenir le bouchon (30) sur la bague de goulot (10) lorsque le bouchon (30) est engagé sur celle-ci.

3. Combinaison selon la revendication 1 ou la revendication 2, en outre **caractérisée en ce que** chaque rebord annulaire de goulot (19, 22) comprend une lèvre circonférencielle (21, 23).

4. Combinaison selon une quelconque des revendications 1 à 3, en outre **caractérisée en ce que** les filets (43) du bouchon sont en nombre égal et ont le même angle d'hélice que les filets (24) du goulot.

5. Combinaison selon une quelconque des revendications 1 à 4, en outre **caractérisée en ce que** chaque filet hélicoïdal (24, 43) s'étend sur moins de 180°, de préférence moins de 90°, autour de la surface de la paroi externe du goulot ou de la paroi interne du bouchon.

6. Combinaison selon une quelconque des revendications 1 à 5, en outre **caractérisée en ce que** la paroi annulaire (12) du goulot possède une ou plusieurs lignes de partage de moulage (25) et les filets (24) sont discontinus au niveau de la ou des lignes de partage.

7. Combinaison selon une quelconque des revendications 1 à 6, en outre **caractérisée en ce que** le bouchon (30) est fait en un matériau plastique de faible densité, par exemple du polypropylène.

8. Conteneur comportant :
- une bague de goulot (10) ayant une paroi annulaire (12) avec une surface extérieure et une surface intérieure définissant une ouverture cylindrique (13) à travers celle-ci ;
- au moins un jeu de dents à rochet (18) disposé autour d'une partie de la surface de paroi extérieure à une extrémité de la paroi ; et
- des amorces de filets multiples (24) hélicoïdalement espacés et disposés sur la surface de paroi extérieure entre l'autre extrémité de paroi et les dents à rochet ;
- destiné à être utilisé avec un bouchon inviolable à ajustement par encliquetage ou vissage et susceptible de se dévisser, comportant
- un organe de fermeture ayant un sommet (31) avec une périphérie sensiblement circulaire pour couvrir la bague de goulot et une paroi annulaire (32) dépendant de la périphérie du sommet et comprenant une surface interne ;
- une bande amovible d'inviolabilité (34) disposée circonférenciellement autour de la paroi annulaire dépendante opposée au couvercle, la bande d'inviolabilité comprenant au moins un moyen (39) pour venir en prise avec les dents à rochet ; et
- des amorces de filets multiples (43) hélicoïdalement espacés et disposés sur la surface de paroi interne pour venir au contact d'au moins certains des filets sur la bague de goulot, les filets s'étendant depuis au-dessus de la bande d'inviolabilité jusqu'à proximité du sommet de l'organe de fermeture ;
- les filets (43) du bouchon étant adaptés pour venir au contact des filets (24) de la bague de goulot soit par vissage soit par l'application directe d'une force de compression ;
- **caractérisé en ce que** la bague de goulot (10) possède au moins dix filets (24) et un premier rebord annulaire (19) sur, et s'étendant sensiblement autour de, la surface extérieure de la paroi entre les filets (24) et le jeu de dents à rochet (18) et est destinée à être utilisée avec un bouchon inviolable (30) donné ayant au moins dix filets (43) et un premier rebord annulaire (40) disposé autour de la surface de la paroi interne au voisinage de la bande d'inviolabilité (34) ; et
- le premier rebord annulaire (19) du goulot est disposé et dimensionné pour venir au contact et coopérer, pendant l'utilisation, avec le premier rebord annulaire (40) du bouchon pour retenir le bouchon (30) sur la bague de goulot (10) lorsque le bouchon (30) est engagé sur celle-ci.

9. Conteneur selon la revendication 8, en outre **caractérisé en ce que** la bague de goulot (10) comprend un deuxième rebord annulaire (22) disposé entre l'autre extrémité (14) de la paroi annulaire (12) et les filets (24) et est destinée à être utilisée avec un bouchon donné (30) comprenant un deuxième rebord annulaire (41) disposé entre le sommet (31) et les filets (43) ; le deuxième rebord annulaire (22) du goulot étant disposé et dimensionné pour venir au contact et coopérer, pendant l'utilisation, avec le deuxième rebord annulaire (41) du bouchon (30) afin de retenir le bouchon (30) sur la bague de goulot lorsque le bouchon (30) est engagé sur celle-ci.

10. Conteneur selon la revendication 8 ou la revendication 9, en outre **caractérisé en ce que** chaque rebord annulaire (19, 22) du goulot comprend une lèvre circonférencielle (21, 23).

11. Conteneur selon une quelconque des revendications 8 à 10, en outre **caractérisé en ce que** chaque filet hélicoïdal (24) s'étend sur moins de 180°, de préférence moins de 90°, autour de la surface de la paroi extérieure du goulot.

12. Conteneur selon une quelconque des revendications 8 à 11, en outre **caractérisé en ce que** la paroi annulaire (12) du goulot possède une ou plusieurs lignes de partage de moulage (25) et les filets (24) sont discontinus au niveau de la ou des lignes de partage.

13. Bouchon inviolable s'ajustant par encliquetage ou vissage et se dévissant, comportant :
- un organe de fermeture ayant un sommet (31) avec une périphérie sensiblement circulaire pour recouvrir une bague de goulot (10) d'un conteneur et une paroi annulaire (32) dépendant de la périphérie du sommet et comprenant une surface interne ;
- une bande amovible d'inviolabilité (34) disposée circonférenciellement autour de la paroi annulaire dépendante (32), à l'opposé du sommet (31), la bande d'inviolabilité (34) comprenant au moins un moyen (39) pour venir au contact de dents à rochet (18) sur la bague de goulot (10) ; et
- des amorces de filets multiples (43) hélicoïdalement espacés et disposés sur la surface de paroi interne pour venir au contact d'au moins certains filets (24) sur la bague de goulot (10), les filets (43) s'étendant depuis au-dessus de la bande d'inviolabilité (34) jusqu'au voisinage du sommet de l'organe de fermeture (31) ;
- destiné à être utilisé avec un conteneur donné comportant :
- la bague de goulot (10) ayant une paroi annulaire (12) avec une surface extérieure et une surface intérieure définissant une ouverture cylindrique (13) à travers celle-ci ;
- au moins un jeu des dents à rochet (18) disposés autour d'une partie de la surface de paroi extérieure à une extrémité de la paroi ; et
- des filets (24) étant des amorces de filets multiples (24) hélicoïdalement espacés et disposés sur la surface de paroi extérieure entre l'autre extrémité de paroi (14) et les dents à rochet (18) ;
- les filets (43) du bouchon étant adaptés pour venir au contact des filets (24) de la bague de goulot par vissage ou application directe d'une force de compression ;
- **caractérisé en ce que** le bouchon inviolable (30) possède au moins dix filets (43) et un premier rebord annulaire (40) disposé autour de la surface de paroi interne au voisinage de la bande d'inviolabilité (34) ; et est destiné à être utilisé avec un conteneur donné comportant la bague de goulot (10) ayant au moins dix filets (24) et un premier rebord annulaire (19) sur, et s'étendant sensiblement autour de, la surface externe de la paroi entre les filets (24) et le jeu de dents à rochet (18) et le premier rebord annulaire (46) du bouchon est disposé et dimensionné pour venir en contact et coopérer, pendant l'utilisation, avec le premier rebord annulaire (19) du goulot afin de retenir le bouchon (30) sur la bague de goulot (10) lorsque le bouchon (30) est engagé sur celle-ci.

14. Bouchon selon la revendication 13, en outre **caractérisé en ce que** le bouchon (30) comprend un deuxième rebord annulaire (41) disposé entre le sommet (31) et les filets (43) ; et est destiné à être utilisé avec une bague de goulot (10) donnée comprenant un deuxième rebord annulaire (22) disposé entre l'autre extrémité (14) de la paroi annulaire (12) et les filets (24), le deuxième rebord annulaire (41) du bouchon étant disposé et dimensionné pour venir au contact et coopérer, pendant l'utilisation, avec le deuxième rebord annulaire (22) du goulot afin de retenir le bouchon (30) sur la bague de goulot (10) lorsque le bouchon (30) est engagé sur celle-ci.

15. Bouchon selon la revendication 13 ou la revendication 14, en outre **caractérisé en ce que** les filets (43) du bouchon sont en nombre égal et ont le même angle d'hélice que les filets (24) de goulot d'une bague de goulot (10) d'un conteneur donné.

16. Bouchon selon une quelconque des revendications 13 à 15, en outre **caractérisé en ce que** chaque filet hélicoïdal (43) du bouchon s'étend sur moins de 180°, de préférence moins de 90°, autour de la surface de paroi interne du bouchon.

17. Combinaison de revendications quelconques 13 à 16, en outre **caractérisée en ce que** le bouchon (30) est fait en un matériau plastique de faible densité, par exemple du polypropylène.
